# EUROPÄISCHE PATENTSCHRIFT

(11) **EP 2 184 514 B1**
(45) Veröffentlichungstag und Bekanntmachung des Hinweises auf die Patenterteilung: **24.12.2014**
(21) Anmeldenummer: 09013675.5
(22) Anmeldetag: 30.10.2009
(51) Int. Cl.: F16H 49/00

(54) **Spannungswellengetriebe**
Wave gear drive
Transmission à démultiplication harmonique

(30) Priorität: 30.10.2008 DE 102008053914
(43) Veröffentlichungstag der Anmeldung: 12.05.2010
(73) Patentinhaber: Ovalo GmbH, 65555 Limburg a. d. Lahn (DE)
(72) Erfinder:
(74) Vertreter: Grabovac, Dalibor

(56) Entgegenhaltungen:
- EP-A- 0 113 375
- EP-A- 0 529 521
- DE-A1- 10 024 908
- JP-A- 2 275 147
- SU-A2- 1 525 367
- US-A- 3 435 705

## Beschreibung

Die Erfindung betrifft ein Spannungswellengetriebe mit einem Wellengenerator zum Erzeugen einer Drehbewegung und mit einem Flexspline, an dessen Innenumfang oder Außenumfang wenigstens ein Bauteil angreift, welches die Drehbewegung des Wellengenerators auf den Flexspline überträgt, wobei der Flexspline mit seinem Außenumfang oder Innenumfang an einem Circular Spline und/oder einem Dynamic Spline des Spannungswellengetriebes abrollt oder kämmt. Die Erfindung betrifft ferner ein Spannungswellengetriebe mit einem Circular Spline und einem Dynamic Spline, welche mit einem Flexspline wirkverbunden sind, wobei der Circular Spline und der Dynamic Spline in axialer Richtung des Spannungswellengetriebes hinereinander liegend angeordnet sind.

### Technologischer Hintergrund und Stand der Technik

Spannungswellengetriebe, welche auch als Harmonic Drive-Getriebe bezeichnet werden, weisen ein elastisches Übertragungselement, den Flexspline, auf. Das elastische Übertragungselement wird durch eine Antriebseinrichtung, dem sogenannten Wellengenerator, angetrieben, in dem der Wellengenerator an wenigstens zwei Umfangsabschnitten des elastischen Übertragungselements angreift, dadurch eine Verformung des elastischen Übertragungselements bewirkt und aufgrund der Rotationsbewegung des Wellengenerators eine umlaufende Verformung des elastischen Übertragungselements bewirkt. Der Wellengenerator kann beispielsweise als elliptischer Rotationskörper ausgebildet sein, welcher mit seinen Hauptscheitelpunkten an dem elastischen Übertragungselement angreift, elliptisch verformt und bei Rotationsbewegung des Wellengenerators die elliptische Verformung des elastischen Übertragungselements in einer umlaufenden elliptischen Verformungsbewegung des elastischen Übertragungselements sichtbar wird.

Das Spannungswellengetriebe weist neben dem Wellengenerator und dem Flexspline zusätzlich eine dritte Komponente auf, nämlich wenigstens ein starres Übertragungselement, welches mit dem Flexspline in Wirkverbindung steht. Bei einem Spannungswellengetriebe mit einem innerhalb des Flexsplines angeordneten Wellengenerator ist dieses Übertragungselement üblicherweise als Hohlring ausgebildet, an dessen Innenumfang der Flexspline mit denjenigen Abschnitten angreift, welche durch den Wellengenerator jeweils radial nach außen verformt sind. Durch die Wellbewegung des Wellengenerators wird somit eine Drehbewegung des Flexsplines und gleichzeitig eine Drehbewegung des starren Übertragungselementes bewirkt. Dabei ist es auch möglich, das starre Übertragungselement gehäusefest anzuordnen, sodass in diesem Fall lediglich der Flexspline von dem Wellengenerator in Drehbewegung gebracht wird. Bei weiteren Bauarten des Spannungswellengetriebes können auch zwei starre Übertragungselemente vorgesehen sein, bei denen beispielsweise das eine Übertragungselement gehäusefest gehalten ist und das andere starre Übertragungselement drehbar vorliegt oder beide starren Übertragungselemente drehbar sind. Bei einem Spannungswellengetriebe mit innerhalb des Flexsplines liegendem Wellengenerator sind diese beiden starren Übertragungsglieder üblicherweise jeweils als Hohlrad ausgebildet.

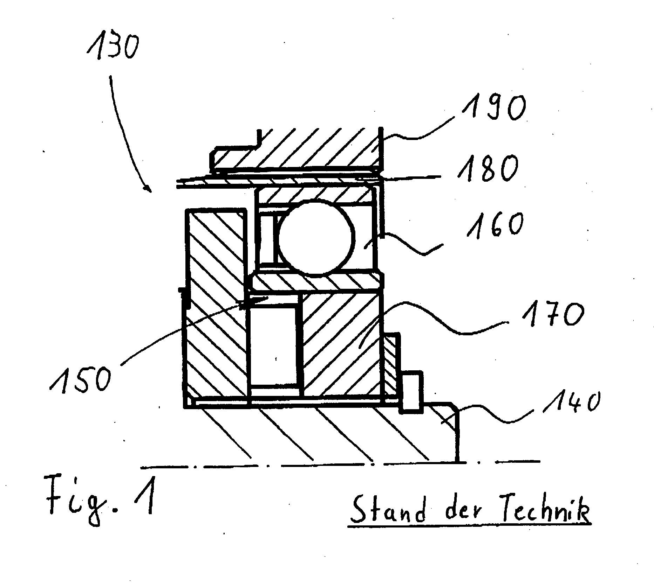

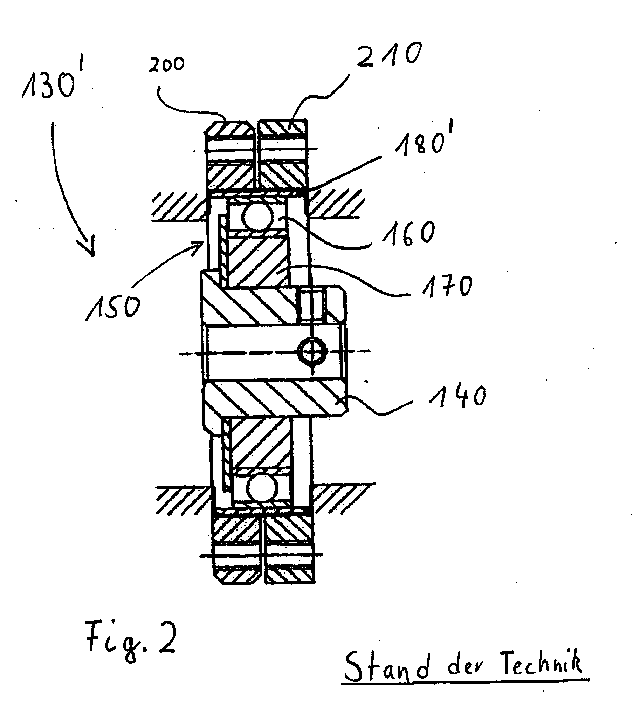

Die Figuren 1 und 2 zeigen zwei Bauformen eines bekannten Spannungswellengetriebes, welche aus dem Hauptkatalog 1989 der Harmonic Drive AG, Limburg, bekannt sind. Bei dem bekannten Spannungswellengetriebe weist der Wellengenerator 150 ein Wälzlager 160 auf, welches zwischen einem elliptisch geformten Innenkern 170 des Wellengenerators 150 und dem Flexspline 180 des Spannungswellengetriebes 180' angeordnet ist. Das Wälzlager 160 ist mit seinem Innenring auf den elliptischen Innenkern 170 aufgebracht. Fig. 1 zeigt dabei ein Spannungswellengetriebe 130 mit lediglich einem starren Übertragungselement 190, welches als Hohlring ausgebildet ist. Fig. 2 zeigt ein Spannungswellengetriebe 130' mit zwei starren Übertragungselementen 200, 210, von denen das eine Übertragungselement 210 gehäusefest und das andere Übertragungselement 200 drehbar angeordnet ist.

Wie aus den Figuren 1 und 2 ersichtlich, ist der Flexspline in axialer Richtung des Spannungswellengetriebes breiter als das Wälzlager ausgebildet, über welches die Drehbewegung von dem Wellengenerator auf den Flexspline übertragen wird. Dadurch kommt es mit zunehmendem Drehmoment an dem Flexspline zu einem Verformen des mit dem Wälzlager wirkverbundenen Abschnitt des Flexsplines relativ gegenüber dem freistehenden Abschnitt des Flexsplines, an welchem das Wälzlager nicht angreift. Durch die Verformung des Flexsplines im Betrieb des Getriebes ist jedoch das von dem Wellengenerator auf den Flexspline übertragbare maximale Drehmoment reduziert. Wie ferner aus Figur 2 ersichtlich, ist bei bekannten Spannungswellengetrieben die Breite des Circular Spline identisch mit der Breite des Dynamic Spline, obwohl im Betrieb des Spannungswellengetriebes auf Circular Spline und Dynamic Spline wirkenden Kräfte unterschiedlich sind.

**Aus der gattungsbildenden** EP 0113 375 **ist ein Reduktionsgetriebe mit einen im Wesendichen elliptischen Wellengenerator und zwei Circular Splines, sowie mit einem Flexspline bekannt, wobei die Innenverzahnungen der Circular Splines in die Außenverzahnung des Flexsplines eingreifen. Zwischen dem Wellengenerator und dem Flexspline ist ein radial deformierbares Lager angeordnet, wobei das Lager nicht breiter ist, als der Flexspline.**

### Aufgabenstellung

Davon ausgehend liegt der Erfindung die Aufgabe zugrunde, Spannungswellengetriebe mit den eingangs genannten Merkmalen vorzuschlagen, welche gegenüber den bisher bekannten Spannungswellengetrieben hinsichtlich der Dimensionierung seiner Bauteile konstruktiv optimiert sind.

### Erfindung und vorteilhafte Wirkungen

Zur Lösung der Aufgabe wird ein Spannungswellengetriebe vorgeschlagen, welches die in Anspruch 1 genannten Merkmale aufweist. Vorteilhafte Ausgestaltungen der Erfindung ergeben sich aus den Unteransprüchen und der nachfolgenden Beschreibung.

Das erfindungsgemäße Spannungswellengetriebe gemäß dem Anspruch 1 hat einen Wellengenerator zum Erzeugen einer Drehbewegung und einen Flexspline, an dessen Innenumfang oder Außenumfang wenigstens ein Bauteil angreift, welches die Drehbewegung des Wellengenerators auf den Flexspline überträgt, wobei der Flexspline mit seinem Außenumfang oder Innenumfang an einem Circular Spline und/oder einem Dynamic Spline des Spannungswellengetriebes abrollt oder kämmt.

Das erfindungsgemäße Spannungswellengetriebe zeichnet sich unter anderem dadurch aus, dass die wirksame Breite des an den Innenumfang oder Außenumfang des Flexsplines angreifenden Bauteiles gegenüber der wirksamen Breite des Flexsplines im Wesentlichen größer ist.

Unter der wirksamen Breite des Flexsplines ist im Zuge der Erfindung derjenige Abschnitt des Flexsplines in axialer Richtung des Spannungswellengetriebes zu verstehen, welcher in Wirkkontakt mit dem Circular Spline und dem Dynamic Spline bringbar ist, sofern das Spannungswellengetriebe zwei starre Übertragungselemente aufweist. Sofern das Spannungswellengetriebe lediglich den Circular Spline oder den Dynamic Spline aufweist, ist im Zuge der Erfindung unter der wirksamen Breite des Flexsplines derjenige Abschnitt des Flexsplines in axialer Richtung zu verstehen, welcher mit dem Circular Spline oder dem Dynamic Spline in Wirkkontakt bringbar ist. Unter der wirksamen Breite des Bauteiles ist im Zuge der Erfindung derjenige Abschnitt in axialer Richtung des Wellengenerators bzw. Spannungswellengetriebes zu verstehen, welcher in Wirkkontakt mit dem Flexspline bringbar ist.

Indem die wirksame Breite des Bauteiles gegenüber der wirksamen Breite des Flexsplines im Wesentlichen größer ist, kann der Flexspline über seine gesamte wirksame Breite in Wirkkontakt mit dem Bauteil bzw. dessen wirksamer Breite treten. Es ist dadurch eine Übertragung der Drehbewegung des Wellengenerators über das Bauteil auf den Flexspline möglich, wobei etwaige Einbußen im maximal übertragbaren Drehmoment aufgrund Verformungen des Flexsplines in axialer Richtung vermieden werden. Da höhere maximale Drehmomente von dem Wellengenerator auf den Flexspline übertragen werden können, ist die bisher erfolgte Überdimensionierung der Getriebeteile des Spannungswellengetriebes nicht mehr notwendig. Das Spannungswellengetriebe ist dadurch gewichtsmäßig leichter und kompakter realisierbar und gleichzeitig kostengünstiger herstellbar. Auch hat es sich gezeigt, dass das durch die erfindungsgemäße Maßnahme die Laufeigenschaften des Spannungswellengetriebes verbessert sind.

**Die erfindungsgemäße Ausgestaltung, wonach die wirksame Breite des Bauteils gegenüber der wirksamen Breite des Flexsplines im Wesentlichen größer ist, hat gegenüber dem Stand der Technik den besonderen Vorteil, dass das Bauteil stets auch dann über die wirksame Breite des Flexspline an dem Flexspline anliegt, wenn es im Betrieb zu geringfügigem Versatz des Flexsplines relativ zu dem Bauteil kommt.**

Es bietet sich an, dass der Flexspline an dem Circular Spline über dessen wirksame Breite angreift. Es bietet sich ferner an, dass der Flexspline an dem Dynamic Spline über dessen wirksame Breite angreift. Es ist dadurch eine Übertragung der Drehbewegung des Wellengenerators über das Bauteil auf den Flexspline und von dort auf den Circular Spline und/oder Dynamic Spline möglich, ohne dass es zu Einbußen bei dem maximal übertragbaren Drehmoment aufgrund etwaiger Verformungen des Flexsplines in axialer Richtung kommt. Denn durch diese Maßnahme ist ein die Verformungen im Getriebebetrieb erzeugender freistehender Abschnitt des Flexsplines in axialer Richtung des Spannungswellengetriebes vermieden.

Nach einer Ausgestaltung der Erfindung ist es vorgesehen, dass die wirksame Breite des Bauteiles wenigstens um etwa 5%, vorzugsweise wenigstens um etwa 10% größer als die wirksame Breite des Flexsplines ist. Bezugsgröße für die Prozentangabe ist dabei die wirksame Breite des Flexsplines. Es steht dadurch das Bauteil in axialer Richtung wenigstens an einem der beiden Enden zumindest geringfügig gegenüber dem Flexspline hervor. Es ist dadurch möglichen Herstellungstoleranzen zwischen dem Flexspline und dem Bauteil in axialer Richtung des Spannungswellengetriebes Rechnung getragen, so dass auch bei einer geringfügig versetzten Lage des Flexsplines gegenüber dem Bauteil in axialer Richtung das Bauteil über die wirksame Breite des Flexsplines an dem Flexspline anliegt.

Die wirksame Breite des Bauteiles kann bis zu etwa 30%, vorzugsweise bis zu etwa 25% größer als die wirksame Breite des Flexsplines sein. Es ist dadurch gewährleistet, dass trotz Versatz von Flexspline und Bauteil zueinander in axialer Richtung, beispielsweise aufgrund großer vorliegender Herstellungstoleranzen, das Bauteil über die gesamte wirksame Breite des Flexsplines an dem Flexspline angreift und somit eine optimale Übertragung der Drehbewegung vom dem Wellengenerator auf den Flexspline stattfindet. Bezugsgröße für die Prozentangabe ist dabei die wirksame Breite des Flexsplines.

Es bietet sich an, dass das Bauteil wenigstens über die wirksame Breite des Flexsplines an dem Flexspline in Wirkkontakt steht. Ferner bietet es sich an, dass das Bauteil über die wirksame Breite des Flexsplines an dem Flexspline abrollt oder kämmt, insbesondere durchgängig an dem Flexspline abrollt oder kämmt. Durch diese Maßnahme ist eine optimale Übertragung der Drehbewegung von dem Wellengenerator auf den Flexspline und von dem Flexspline auf den Circular Spline bzw. Dynamic Spline gewährleistet, ohne dass es zu etwaigen die Drehbewegungsübertragung behindernden Verformungen an dem Flexspline kommt.

Es kann vorgesehen sein, dass der Flexspline eine Breite aufweist, die größer als seine wirksame Breite ist. Eine mögliche Ausgestaltung kann es sein, dass der Flexspline seitlich über die wirksame Breite des an dem Flexspline angreifenden Bauteiles hinausragt, beispielsweise indem an dem hinausragenden Abschnitt eine Fase gebildet ist oder der Flexspline an dem nach außen herausragenden Abschnitt eine Führung bildet, an welcher der Flexspline an einer Gegenführungswand geführt ist. Die Führung kann beispielsweise durch die Stirnseite des nach außen ragenden Abschnittes des Flexsplines gebildet sein, welche gegen eine in radialer Richtung sich erstreckende Gegenführungswand abstützt bzw. geführt ist. Sofern eine solche Führung beidseitig des Flexsplines realisiert ist, ist der Flexspline in seiner axialen Bewegung zudem begrenzt. Insofern bildet eine beiseitige Führung, zwischen welcher sich der Flexspline befindet zugleich eine axiale Lagesicherung bezüglich des Flexsplines.

Nach einer weiteren Ausgestaltung der Erfindung ist es vorgesehen, dass das wenigstens eine Bauteil ein Lager, insbesondere ein Wälzlager oder ein Gleitlager ist, welches den die Wellenbewegung erzeugende Grundkörper des Wellengenerators umgibt.

Nach einer weiteren Ausgestaltung der Erfindung kann es vorgesehen sein, dass das wenigstens eine Bauteil ein Planetenrad eines als Wellengenerator dienenden Planetengetriebes ist.

Die erfindungsgemäße Ausgestaltung der wirksamen Breite des wenigstens einen an dem Flexspline angreifenden Bauteiles kann somit bei allen gängigen Arten von Wellengeneratoren realisiert sein.

Nach einer weiteren Ausgestaltung der Erfindung ist es vorgesehen, dass der Flexspline in axialer Richtung sich wenigstens über seine wirksame Breite hinaus erstreckt. Dadurch ist die Möglichkeit gegeben, dem Flexspline neben seiner Funktion der Bewegungsübertragung eine weitere Funktion zukommen zu lassen. Mit Vorteil ist die in axialer Richtung überstehende Stirnseite des Flexsplines zumindest teilweise als Führungsfläche, ausgebildet welche an einer Gegenführungsfläche geführt werden kann. Es bietet sich an, dass der Flexspline in axialer Richtung an seinen beiden Seiten über die wirksame Breite hinausragt und die gegenüberliegenden Stirnseiten zumindest teilweise eine Führungsfläche bilden. Dadurch kann in einfacher Weise eine axiale Lagesicherung bezüglich des Flexsplines realisiert werden, indem der Flexspline mit seinen Führungsflächen zwischen zwei Gegenführungsflächen angeordnet ist.

Eine besondere Ausführungsform des erfindungsgemäßen Spannungswellengetriebes hat einen Circular Spline und einen Dynamic Spline, welche mit einem Flexspline wirkverbunden sind, wobei der Circular Spline und der Dynamic Spline in axialer Richtung des Spannungswellengetriebes hintereinanderliegend angeordnet sind. Unter Circular Spline und Dynamic Spline sind im Rahmen der Erfindung die starren bzw. formstabilen Übertragungselemente des Spannungswellengetriebes vorgesehen, welche mit dem Flexspline wirkverbunden sind. Sofern der Circular Spline, Dynamic Spline und Flexspline jeweils Verzahnungen aufweisen, mittels denen Cicular Spline und Flexspline sowie Dynamic Spline und Flexspline miteinander kämmen, hat die Verzahnung des Dynamic Spline die gleiche Zähnezahl wie die Verzahnung des Flexspline. Dagegen weist die Verzahnung des Circular Spline wenigstens einen Zahn mehr, vorzugsweise zwei Zähne oder vier Zähne mehr als die Verzahnung von Flexspline bzw. Dynamic Spline auf.

Das Spannungswellengetriebe zeichnet sich unter anderem dadurch aus, dass der Circular Spline und der Dynamic Spline zumindest im Koppelbereich mit dem Flexspline unterschiedliche Breite aufweisen.

Durch diese Maßnahme sind der Circular Spline und der Dynamic Spline filexibel auf die jeweils auf das Bauteil wirkenden Kräfte dimensionierbar. Bei den bisherigen Spannungswellengetrieben sind Dynamic Spline und Circular Spline mit gleicher Breite ausgebildet, sodass durchweg das eine Bauteil gegenüber dem anderen Bauteil überdimensioniert ist. Eine solche Überdimensionierung ist durch die vorgeschlagene Maßnahme vermieden, da der Circular Spline bezüglich der auf ihm wirkenden Kräfte und in entsprechender Weise der Dynamic Spline bezüglich der auf diesen wirkenden Kräfte dimensioniert werden kann. Unter der Breite des Circular Splines bzw. Dynamic Splines ist die wirksame Breite zu verstehen, mit welcher Circular Spline bzw. Dynamic Spline mit dem Flexspline in Wirkverbindung bringbar sind.

Nach einer Ausgestaltung dieses Erfindungsgedankens ist es vorgesehen, dass der Circular Spline gegenüber dem Dynamic Spline zumindest im Koppelbereich mit dem Flexspline eine größere Breite aufweist. Aktuelle Versuche haben ergeben, dass der Circular Spline gegenüber dem Dynamic Spline stärker beansprucht wird. Selbstverständlich kann es auch vorgesehen sein, dass der Dynamic Spline gegenüber dem Circular Spline zumindest im Koppelbereich mit dem Flexspline eine größere Breite aufweist.

Mit Vorteil ist der Circular Spline gegenüber dem Dynamic Spline zumindest im Koppelbereich mit dem Flexspline um etwa 10% bis 60%, vorzugsweise etwa 20% bis 50% breiter ausgebildet. Bei einer solchen Dimensionierung der Breite von Circular Spline gegenüber der Breite des Dynamic Splines ist den im Betrieb des Spannungswellengetriebes auftretenden Unterschieden in den am Dynamic Spline bzw. Circular Spline auftretenden Kräften entsprechend Rechnung getragen, so dass bei Einhaltung dieser relativen Unterschiede in der Breite von Dynamic Spline und Circular Spline eine an die jeweilige Belastung angepasste Dimensionierung möglich ist.

Bevorzugt sollte der Circular Spline etwa ein Drittel breiter sein als der Dynamic Spline.

Nach einer vorteilhaften Ausgestaltung des erfindungsgemäßen Spannungswellengetriebes ist es vorgesehen, dass der Abstand der voneinander abgewandten Stirnseiten von Circular Spline und Dynamic Spline im Wesentlichen der Breite des Flexsplines in seinem wirksamen Bereich entspricht. Dadurch ist eine höhere Kraftübertragung von dem Wellengenerator über den Flexspline auf den Circular Spline bzw. Dynamic Spline realisiert, da sich der Innenring des Lagers des Wellengenerators und der Flexspline in axialer Richtung gesehen, vollständig überdecken und der Circular Spline sowie der Dynamic Spline mit ihrer gesamten Breite im Koppelbereich an dem Fiexspline in Wirkkontakt treten bzw. angreifen.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale in beliebiger sinnvoller Kombination den Gegenstand der vorliegenden Erfindung, auch unabhängig ihrer Zusammenfassung in den Ansprüchen oder deren Rückbeziehung.

Es zeigen:
- Fig. 1: ein bekanntes Spannungswellengetriebe in Topfbauweise mit einem ein Wälzlager aufweisenden Wellengenerator als Schnittdarstellung,
- Fig. 2: ein bekanntes Spannungswellengetriebe in Flachbauweise mit einem ein Wälzlager aufweisenden Wellengenerator in Schnittdarstellung,
- Fig. 3: eine nicht beanspruchte Ausführungsform eines Spannungswellengetriebes in Schnittdarstellung,
- Fig. 4: das Detail B des Spannungswellengetriebes gemäß Fig. 3,
- Fig. 5: das Spannungswellengetriebe gemäß Fig. 3 in Vorderansicht,
- Fig. 6: den Flexspline des Spannungswellengetriebes gemäß Fig. 3 in perspektivischer Darstellung,
- Fig. 7: den Flexspline gemäß Fig. 6 in Schnittdarstellung,
- Fig. 8: das Detail B des Flexsplines gemäß Fig. 7,
- Fig. 9: den Grundkörper des Wellengenerators des Spannungswellengetriebes gemäß Fig. 3 in perspektivischer Ansicht,
- Fig. 10: den Grundkörper gemäß Fig. 9 in Schnittdarstellung,
- Fig. 11: das Detail D des Grundkörpers gemäß Fig. 10,
- Fig. 12: eine weitere mögliche Ausführungsform eines Spannungswellengetriebes in Schnittdarstellung und
- Fig. 13a, 13c, 13 d: jeweils einen Ausschnitt aus einer Schnittdarstellung eines nicht beanspruchten Spannungswellengetriebes im Bereich des Überganges vom Wellengenerator auf den Flexspline und vom Flexspline auf den Circular Spline bzw. Dynamic Spline.
- Fig. 13b, 13e: jeweils einen Ausschnitt aus einer Schnittdarstellung eines möglichen erfindungsgemäßen Spannungswellengetriebes im Bereich des Überganges vom Wellengenerator auf den Flexspline und vom Flexspline auf den Circular Spline bzw. Dynamic Spline.

Figur 1 zeigt - in schematischer Darstellung - einen Ausschnitt von einem bekannten Spannungswellengetriebe 130, welches einen mit einer Eingangswelle 140 gekoppelten Wellengenerator 150 aufweist. Der Wellengenerator hat einen elliptisch geformten Innenkern 170, welcher drehfest mit der Eingangswelle 140 verbunden ist. Auf dem Außenumfang des Innenkerns 170 ist ein Wälzlager 160 aufgeschrumpft, welches mit seinem Innenring auf dem Außenumfang des Innenkerns 170 sitzt. Das durch den Innenkern 170 entsprechend elliptisch verformte Wälzlager 160 steht in Wirkverbindung mit dem Innenumfang des Flexsplines 180, welcher bei der Ausführungsform gemäß des bekannten Spannungswellengetriebes 130 nach der Fig. 1 topfförmig ausgebildet ist. In Fig. 1 ist lediglich der endseitige zylindrische Abschnitt des topfförmigen Flexsplines 180 dargestellt.

Der Außenumfang des Flexsplines 180 ist im Bereich der Hauptscheitelpunkte der Ellipse mit einem starren Übertragungselement gekoppelt. Das starre Übertragungselement 190 kann als Abtriebselement dienen oder gehäusefest angeordnet sein. Auch der Flexspline 180 kann gehäusefest angeordnet sein, oder als Abtriebsglied dienen.

Figur 2 zeigt eine andere Ausführungsform eines bekannten Spannungswellengetriebes 130' in schematischer Darstellung. Das Spannungswellengetriebe 130' gemäß Fig. 2 ist in der sogenannten Flachbauweise realisiert, das heißt, das Spannungswellengetriebe 130' weist einen Flexspline 180' auf, welcher ringförmig ausgebildet ist. Dadurch ist das Spannungswellengetriebe 130' in axialer Richtung kompakter realisierbar, als beispielsweise das Spannungswellengetriebe 130 gemäß Fig. 1 mit seinem topfförmigen Flexspline 180.

Das Spannungswellengetriebe gemäß Fig. 2 weist zwei starre Übertragungselemente 200, 210 auf, welche mit dem Flexspline 180 in Wirkverbindung stehen, insbesondere mit diesem kämmen.

Auch das Spannungswellengetriebe 130' gemäß der Fig. 2 weist einen Wellengenerator 150 auf, mit einem zwischen Innenkern 170 und einem darauf aufgeschrumpften Wälzlager mit Lagerinnenring und Lageraußenring.

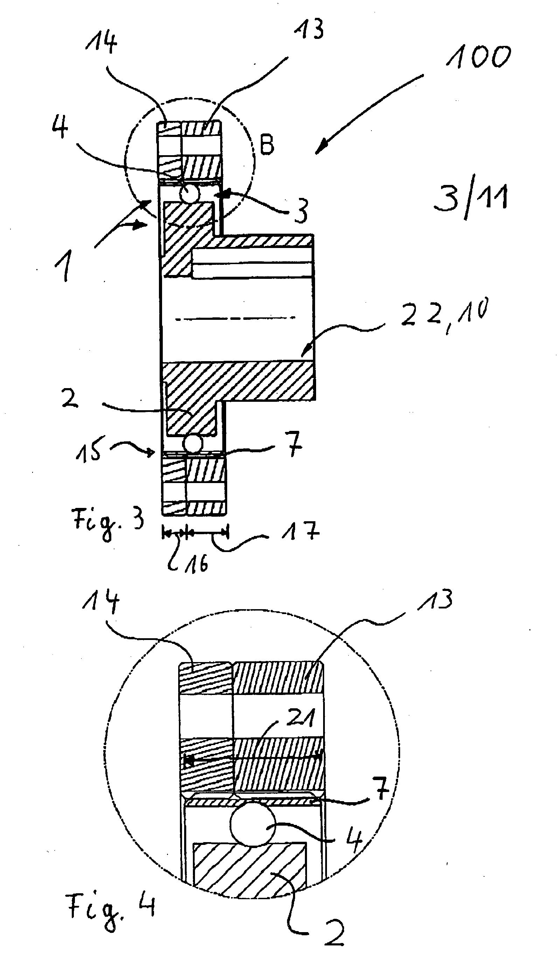

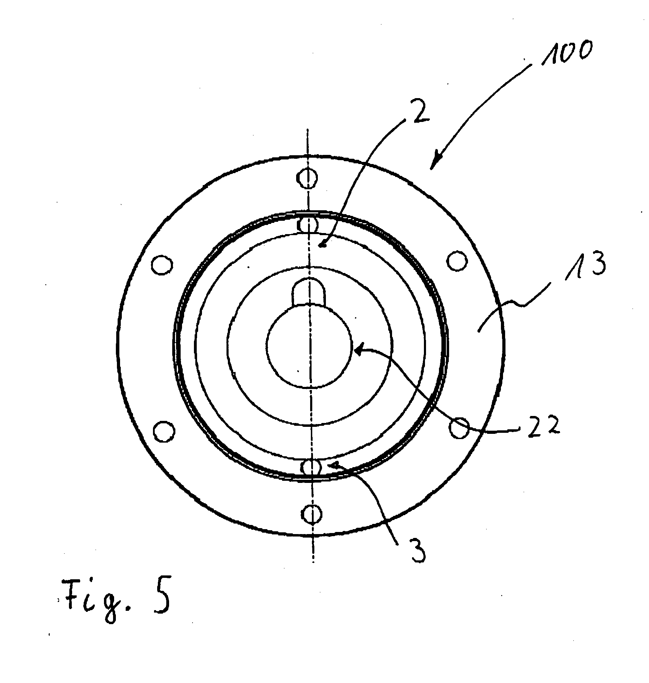

Figuren 3 bis 5 zeigen zum Erleichtern des Verständnisses der Erfindung eine mögliche Ausführungsform eines nicht beanspruchten Spannungswellengetriebes 100 in verschiedenen Ansichten als schematische Darstellung. Das Spannungswellengetriebe 100 hat einen eine Wellbewegung erzeugenden Grundkörper, welcher bevorzugt an einer Nabe 22 zum drehfesten Ankoppeln an beispielsweise einer (nicht dargestellten) Eingangswelle oder Ausgangswelle angeformt ist. Der Grundkörper 2 hat bevorzugt die Form einer Ellipse und ist umfangsseitig mit einem Wälzlager 4, vorzugsweise einem Kugellager gekoppelt, welches durch den Grundkörper 2 in gleicher Weise verformt ist.

Das Wälzlager 3 ist im Bereich der Hauptellipsenachse der durch den Grundkörper 2 gebildeten Ellipse mit dem Flexspline gekoppelt, welcher wiederum in diesem Koppelbereich 15 mit starren Übertragungselementen 13, 14 in Wirkverbindung steht. Bevorzugt sind das starre Übertragungselement 14 als Dynamic Spline und das starre Übertragungselement 13 als Circular Spline ausgebildet, bevorzugt in Art von Ringen. Bevorzugt ist die Wirkverbindung zwischen dem Flexspline 7 und dem Circular Spline 13 und dem Dynamic Spline 14 durch Verzahnungen realisiert, das heißt, die Verzahnung des Flexsplines 7 greift in die Verzahnungen des Dynamic Spline 14 und in die Verzahnung des Circular Spline 13.

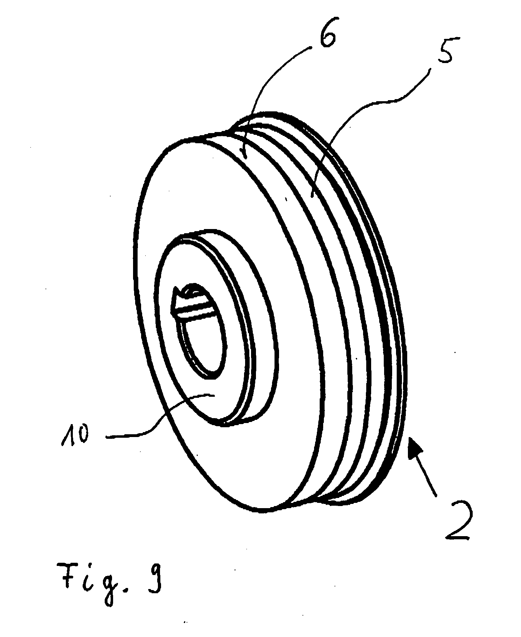

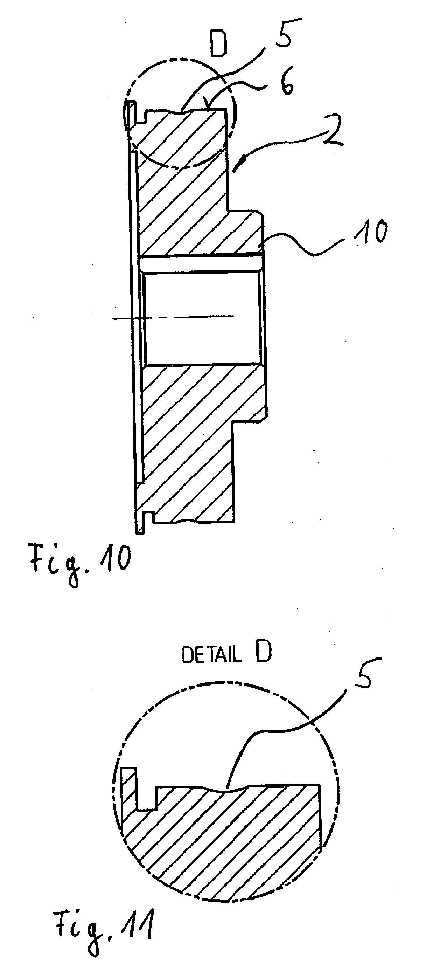

Der Grundkörper 2 bildet dabei einen Teil des Lagers 3. Darüber hinaus bildet der Flexspline 7 ebenfalls einen Teil des Lagers 3. Mit anderen Worten, das Spannungswellengetriebe 100 weist gegenüber den bekannten Spannungswellengetrieben 130, 130' ein Wälzlager ohne Lagerinnenring und Lageraußenring auf. Die Funktion des Lagerinnenrings sowie des Lageraußenrings übernimmt bei dem Spannungswellengetriebe 100 der Grundkörper 2 sowie der Flexspline 7. Der Grundkörper 2 weist dazu eine Laufbahn 5 für das Lager 3 auf, wie insbesondere aus den Figuren 9 bis 11 ersichtlich ist.

Die Laufbahn 5 erstreckt sich um den Außenumfang 6 des Grundkörpers 2, wobei der Grundkörper 2 zumindest im Bereich dieser Lagerlaufbahn 5 eine geschliffene, vorzugsweise eine gehärtete Oberfläche aufweist. Die Lagerlaufbahn des Grundkörpers 2 ist bevorzugt durch eine Vertiefung 5 im Außenumfang 6 des Grundkörpers 2 gebildet. Dabei ist vorzugsweise die Form der Vertiefung 5 an die Kontur der Wälzkörper 4, vorzugsweise der Kugeln, angepasst. Durch die Vertiefung 5 ist eine Laufrille für die Wälzkörper 4 realisiert, in welcher die Wälzkörper 4, vorzugsweise umlaufend, abrollen können.

Der Grundkörper 2 weist ein Koppelelement 10 auf, mittels welchem der Grundkörper 2 mit einem (nicht dargestellten) Abtriebselement eines Antriebes koppelbar, vorzugsweise formschlüssig koppelbar ist. Vorzugsweise ist das Koppelelement 10 an dem Grundkörper 2 angeformt.

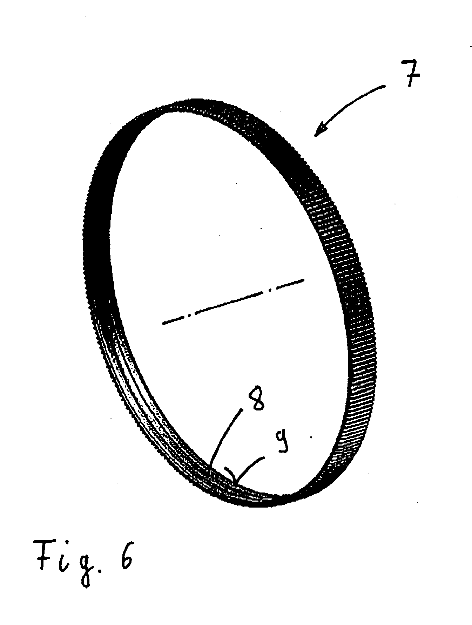

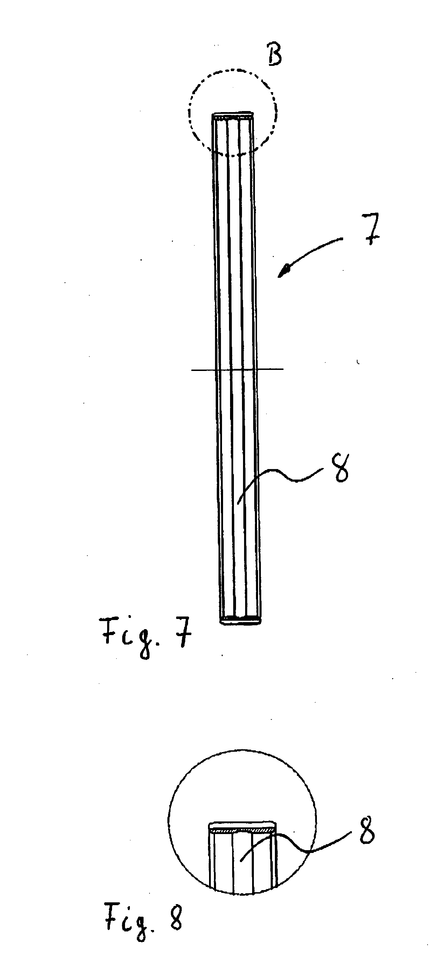

Wie insbesondere aus den Figuren 6 bis 8 ersichtlich ist, weist auch der Flexspline 7 eine Lagerlaufbahn 8 auf. Der Flexspline 7 weist dabei vorzugsweise im Bereich der Lagerlaufbahn 8 eine geschliffene und vorzugsweise gehärtete Oberfläche auf.

Die Lagerlaufbahn 8 des Flexsplines 7 erstreckt sich über den Innenumfang 9 des Flexsplines 7. Die Lagerlaufbahn des Flexsplines ist durch eine Vertiefung 8 gebildet, welche am Innenumfang 9 des Flexsplines 7 angeordnet ist. Die Lagerlaufbahn 8 des Flexsplines 7 ist dabei in gleicher Weise wie die Lagerlaufbahn 5 des Grundkörpers 2 in ihrer Form an die Kontur der Wälzkörper 4 angepasst, sodass die Lagerlaufbahn 8 eine Umlaufrille für die Wälzkörper bildet.

Der Dynamic Spline 14 und der Circular Spline 13 des Spannungswellengetriebes 100 sind in axialer Richtung hintereinanderliegend angeordnet. Wie insbesondere aus Figuren 3 und 4 ersichtlich ist, ist die Breite 17 des Circular Splines 13 größer als die Breite 16 des Dynamic Splines 14. Unter Breite im Sinne der Erfindung ist die Erstreckung des Hohlringes in axialer Richtung zumindest im Koppelbereich 15 mit dem Flexspline 7 zu verstehen.

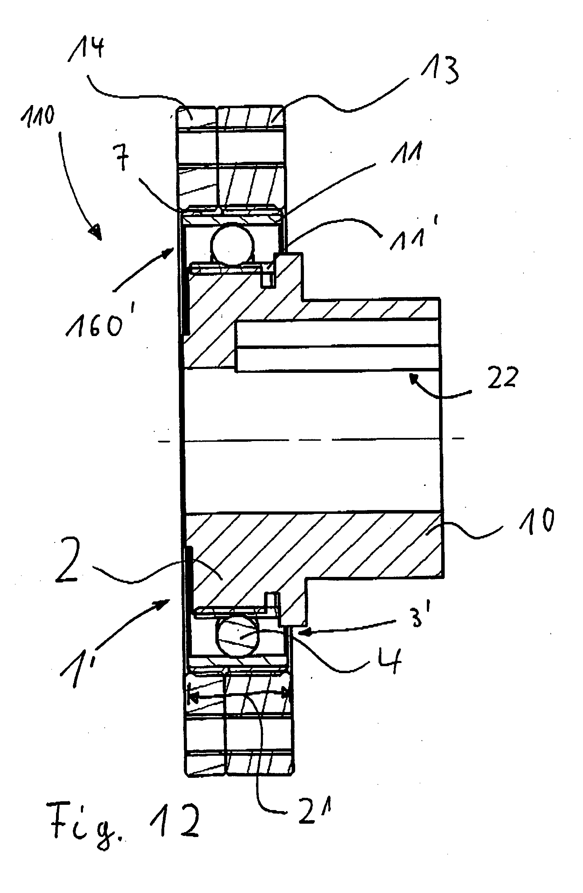

Figur 12 zeigt eine weitere Ausführungsform eines Spannungswellengetriebes 110, bei dem der Gedanke bezüglich unterschiedlicher Breite von Circular Spline 13 und Dynamic Spline 14 ebenfalls realisiert ist. Bauteile des Spannungswellengetriebes 110 gemäß Fig. 12, welche mit den Bauteilen des Spannungswellengetriebes 100 gemäß den Figuren 3 bis 11 identisch sind, sind mit gleichen Bezugszeichen versehen. Insofern wird auf die Beschreibung zu den Figuren 3 bis 11 verwiesen.

Das Spannungswellengetriebe 110 gemäß Fig. 12 unterscheidet sich von dem Spannungswellengetriebe 100 gemäß der Figuren 3 bis 9 unter anderem dadurch, dass ein Wälzlager 160' mit einem äußerem Lagerring 11 und ggf. zusätzlich einem inneren Lagerring 11' vorgesehen ist. Der äußere Lagerring 11, welcher in Wirkkontakt mit dem Flexspline 7 tritt, weist dabei eine Breite auf, welche im Wesentlichen mit der Breite des Flexsplines 7 identisch ist oder auch größer sein kann. Damit unterscheidet sich das Wälzlager 160' des Spannungswellengetriebes 110 gegenüber dem bisher bekannten Wälzlager 160 gemäß der Figuren 1 und 2, bei dem der äußere Lagerring eine geringere Breite als die Breiten der starren Übertragungselemente 190 bzw. 200, 210 auf.

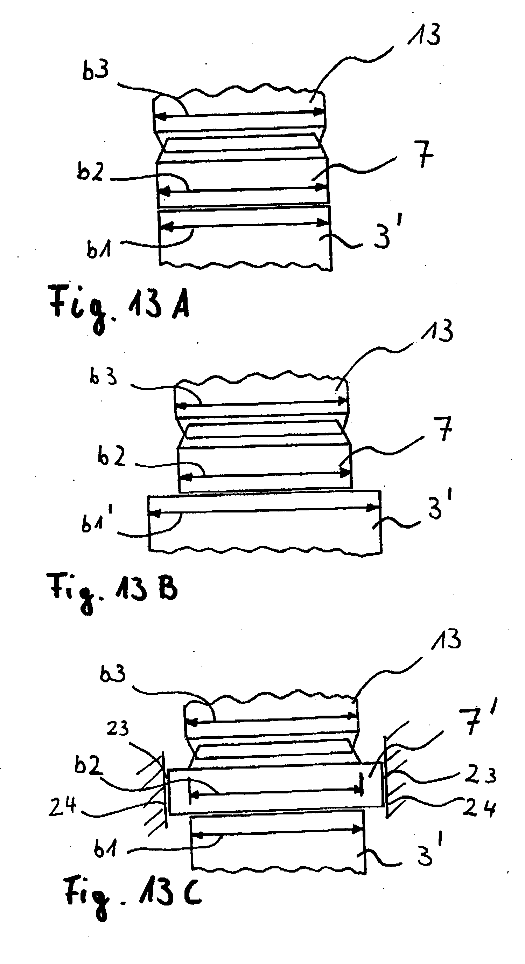

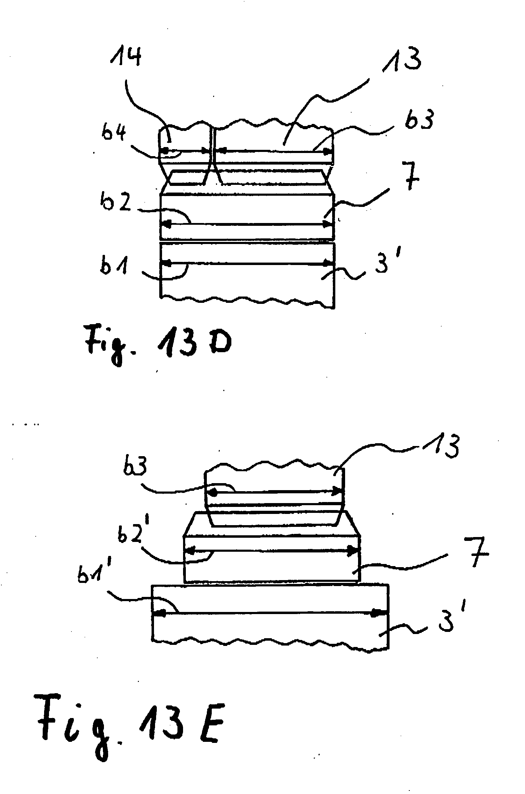

Figuren 13b und 13e zeigen - in schematischer Schnittdarstellung - eine mögliche Ausführungsform eines Spannungswellengetriebes im Kopplungsbereich von Wellengenerator mit dem Flexspline und dem Circular Spline bzw. dem Dynamic Spline des Spannungswellengetriebes.

Figur 13a zeigt eine nicht beanspruchte Ausführungsform, bei der die wirksame Breite b1 des an den Flexspline 7 angreifenden Bauteiles bzw. Wälzlager 3' gegenüber der wirksamen Breite b2 des Flexsplines 7 im Wesentlichen gleich ist. Ferner ist die wirksame Breite b2 des Flexsplines 7 wiederum gegenüber der wirksamen Breite b3 des Circular Splines 13 im Wesentlichen gleich.

Figur 13b zeigt eine Ausgestaltung, bei der das Bauteil 3' eine wirksame Breite b1' aufweist, welche gegenüber der wirksamen Breite b2 des Flexsplines 7 größer ist.

Die Figur 13c wiederum zeigt eine nicht beanspruchte Ausgestaltung, welche sich gegenüber der Ausgestaltung von Figur 13a unter anderem dadurch unterscheidet, dass dort ein Flexspline 7' vorgesehen ist, welcher in axialer Richtung des Wellengenerators 7' beidseitig über die wirksame Breite b2 des Flexsplines 7' übersteht. Die Stirnseiten des Flexsplines 7' sind dabei zumindest teilweise als Führungsflächen 23 ausgebildet. Die Führungsflächen 23 können gegenüber einer Gegenführungsfläche 24 geführt werden, so dass der Flexspline 7' in axialer Richtung lagegesichert ist.

Figur 13d zeigt eine nicht beanspruchte Variante, bei der im Unterschied zu den Varianten der Figuren 13a, 13b und 13c unter anderem zusätzlich zu dem Circular Spline 13 auch der Dynamic Spline 14 vorgesehen ist, welche in axialer Richtung hintereinanderliegend angeordnet sind. Der Circular Spline 13 und der Dynamic Spline 14 können dabei in axialer Richtung zueinander beabstandet liegen oder zumindest teilweise aneinander anliegen. Der Flexspline 7 greift an dem Circular Spline 13 über dessen wirksame Breite b3 an. Ebenso greift der Flexspline 7 an dem Dynamic Spline 14 über dessen wirksame Breite b4 an.

Figur 13e wiederum zeigt eine Variante, bei der einer der beiden äußeren Hohlringe, nämlich lediglich der Circular Spline 13 vorgesehen ist. Die Variante gemäß der Figur 13e kann selbstverständlich auch mit dem Dynamic Spline 14 realisiert sein. Bei dieser Variante weist das Bauteil 3' eine wirksame Breite b1' auf, welche gegenüber der wirksamen Breite b2' des Flexsplines 7 größer ist. Die wirksame Breite b2' des Flexsplines 7 wiederum ist gegenüber der wirksamen Breite b3 des Circular Splines 13 größer ausgebildet. Dadurch ist sichergestellt, dass das Bauteil 3' über die wirksame Breite b2' an dem Flexspline 7 angreift und wiederum der Flexspline 7 über die wirksame Breite b3 des Circular Splines 13 an dem Circular Spline 13 angreift. Bei einem Kraftfluss bzw. Drehmomentenfluss ausgehend von dem Wellengenerator hin zu dem Circular Spline 13 bzw. Dynamic Spline 14 ist somit jeweils das Drehmoment aufnehmende Teil mit seiner wirksamen Breite vollständig in Wirkkontakt mit dem Drehmoment abgebenden Teil gebracht, so dass maximale Drehmomente übertragen werden können.

## Patentansprüche

1. Spannungswellengetriebe (110) mit einem Wellengenerator (1') zum Erzeugen einer Drehbewegung und einem Flexspline (7; 7'), an dessen Innenumfang oder Außenumfang wenigstens ein Bauteil (3') angreift, welches die Drehbewegung des Wellengenerators (1') auf den Flexspline (7; 7') überträgt, wobei der Flexspline (7; 7') mit seinem Außenumfang oder Innenumfang an einem Circular Spline (13) und/oder einem Dynamic Spline (14) des Spannungswellengetriebes (110) abrollt oder kämmt, **dadurch gekennzeichnet, dass** die wirksame Breite (b1; b1') des Bauteiles (3') gegenüber der wirksamen Breite (b2; b2') des Flexspllnes (7; 7') im Wesentlichen größer ist, wobei unter der wirksamen Breite des Flexsplines derjenige Abschnitt des Flexsplines in axialer Richtung des Spannungswellengetriebes zu verstehen ist, welcher in Wirkkontakt mit dem Circular Spline und dem Dynamic Spline bringbar ist, sofern das Spannungswellengetriebe zwei starre Übertragungselemente aufweist und wobei unter der wirksamen Breite des Flexsplines derjenige Abschnitt des Flexsplines in axialer Richtung zu verstehen ist, welcher mit dem Circular Spline oder dem Dynamic Spline in Wirkkontakt bringbar ist, sofern das Spannungswellengetriebe lediglich den Clrcular Spline oder den Dynamic Spline aufweist, und wobei unter der wirksamen Breite des Bauteils derjenige Abschnitt in axialer Richtung des Wellengenerators bzw. Spannungswellengetriebes zu verstehen ist, welcher in Wirkkontakt mit dem Flexspline bringbar ist.

2. Spannungswellengetriebe nach Anspruch 1, **dadurch gekennzeichnet, dass** der Flexspline (7; 7') an dem Circular Spline (13) über dessen wirksame Breite (b3) angreift.

3. Spannungswellengetriebe nach Anspruch 1 oder Anspruch 2, **dadurch gekennzeichnet, dass** der Flexspline (7) an dem Dynamic Spline (14) über dessen wirksame Breite (b4) angreift.

4. Spannungswellengetriebe nach einem der vorhergehenden Ansprüche, **dadurch gekennzeichnet, dass** die wirksame Breite (b1') des Bauteiles (3') wenigstens um 5%, vorzugsweise wenigstens um 10% größer als die wirksame Breite (b2; b2') des Flexsplines (7) ist.

5. Spannungswellengetriebe nach einem der vorhergehenden Ansprüche,
**dadurch gekennzeichnet, dass** die wirksame Breite (b1') des Bauteiles (3') bis zu 30%, vorzugsweise bis zu 25% größer als die wirksame Breite (b2; b2') des Flexsplines (7) ist.

6. Spannungswellengetriebe nach einem der vorhergehenden Ansprüche,
**dadurch gekennzeichnet, dass** das Bauteil (3'), vorzugsweise durchgängig über die wirksame Breite (b2;b2') des Flexsplines (7) an dem Flexspline (7) abrollt oder kämmt.

7. Spannungswellengetriebe nach einem der vorhergehenden Ansprüche,
**dadurch gekennzeichnet, dass** das wenigstens eine Bauteil ein Lager (3'), insbesondere ein Wälzlager (3') oder ein Gleitlager ist, welches den eine Wellbewegung erzeugenden Grundkörper (2) des Wellengenerators (1') umgibt.

8. Spannungswellengetriebe nach einem der Ansprüche 1 bis 6, **dadurch gekennzeichnet, dass** das wenigstens eine Bauteil (3') ein Planetenrad eines als Wellengenerator dienenden Planetengetriebes ist.

9. Spannungswellengetriebe nach einem der vorhergehenden Ansprüche, **dadurch gekennzeichnet, dass** der Flexspline (7') in axialer Richtung sich wenigstens über seine wirksame Breite (b2) hinaus erstreckt und vorzugsweise seine überstehende Stirnseite (23) zumindest teilweise als Führungsfläche dient.

10. Spannungswellengetriebe nach dem Oberbegriff des Anspruchs 1 oder nach einem der vorhergehenden Ansprüche, **dadurch gekennzeichnet, dass** der Circular Spline (13) und der Dynamic Spline (14) vorgesehen sind, welche zumindest im Koppelbereich (15) mit dem Flexspline (7) unterschiedliche Breiten aufweisen.

## Claims

1. Wave gear drive (110), with a wave generator (1') for generating a rotational movement and with a flexible spline (7; 7'), on the inner circumference or outer circumference of which engages at least one component (3') which transmits the rotational movement of the wave generator (1') to the flexible spline (7; 7'), the flexible spline (7; 7') rolling or meshing with its outer circumference or inner circumference on a circular spline (13) and/or a dynamic spline (14) of the wave gear drive (110), **characterized in that** the effective width (b1; b1') of the component (3') is substantially larger than the effective width (b2; b2') of the flexible spline (7; 7'), the effective width of the flexible spline being to be understood to mean that portion of the flexible spline in the axial direction of the wave gear drive which can be brought into operative contact with the circular spline and the dynamic spline, in so far as the wave gear drive has two rigid transmission elements, and the effective width of the flexible spline being to be understood to mean that portion of the flexible spline in the axial direction which can be brought into operative contact with the circular spline or the dynamic spline, in so far as the wave gear drive has only the circular spline or the dynamic spline, and the effective width of the component being to be understood to mean that portion in the axial direction of the wave generator or wave gear drive which can be brought into operative contact with the flexible spline.

2. Wave gear drive according to claim 1, **characterized in that** the flexible spline (7; 7') engages on the circular spline (13) over the effective width (b3) of the latter.

3. Wave gear drive according to claim 1 or claim 2, **characterized in that** the flexible spline (7) engages on the dynamic spline (14) over the effective width (b4) of the latter.

4. Wave gear drive according to one of the preceding claims, **characterized in that** the effective width (b1') of the component (3') is at least 5%, preferably at least 10% larger than the effective width (b2; b2') of the flexible spline (7).

5. Wave gear drive according to one of the preceding claims, **characterized in that** the effective width (b1') of the component (3') is up to 30%, preferably up to 25%, larger than the effective width (b2; b2') of the flexible spline (7).

6. Wave gear drive according to one of the preceding claims, **characterized in that** the component (3') rolls or meshes on the flexible spline (7) preferably continuously over the effective width (b2; b2') of the flexible spline (7).

7. Wave gear drive according to one of the preceding claims, **characterized in that** the at least one component is a bearing (3'), in particular a rolling bearing (3') or a plain bearing, which surrounds the basic body (2) of the wave generator (1'), the said basic body generating a wave motion.

8. Wave gear drive according to one of claims 1 to 6, **characterized in that** the at least one component (3') is a planet wheel of a planetary gear serving as a wave generator.

9. Wave gear drive according to one of the preceding claims, **characterized in that** the flexible spline (7') extends in the axial direction at least over and beyond its effective width (b2), and preferably its projecting end face (23) serves at least partially as a guide surface.

10. Wave gear drive according to the precharacterizing clause of claim 1 or according to one of the preceding claims, **characterized in that** the circular spline (13) and the dynamic spline (14), which have different widths at least in the coupling region (15) with the flexible spline (7), are provided.

## Revendications

1. Transmission à démultiplication harmonique (110) comprenant un générateur d'onde (1') pour générer un mouvement de rotation et une pièce cannelée flexible (7 ; 7'), avec la périphérie intérieure ou la périphérie extérieure de laquelle vient en prise au moins un composant (3') qui transmet le mouvement de rotation du générateur d'onde (1') à la pièce cannelée flexible (7 ; 7'), la pièce cannelée flexible (7 ; 7'), par sa périphérie extérieure ou sa périphérie intérieure, roulant sur ou s'engrenant avec une pièce cannelée circulaire (13) et/ou une pièce cannelée dynamique (14) de la transmission à démultiplication harmonique (110), **caractérisée en ce que** la largeur effective (b1 ; b1') du composant (3') est essentiellement supérieure à la largeur effective (b2 ; b2') de la pièce cannelée flexible (7 ; 7'), où l'on entend par largeur effective de la pièce cannelée flexible la portion de la pièce cannelée flexible dans la direction axiale de la transmission à démultiplication harmonique qui peut être amenée en contact fonctionnel avec la pièce cannelée circulaire et la pièce cannelée dynamique, pour autant que la transmission à démultiplication harmonique comprenne deux éléments de transmission rigides, et où l'on entend par largeur effective de la pièce cannelée flexible la portion de la pièce cannelée flexible dans la direction axiale qui peut être amenée en contact fonctionnel avec la pièce cannelée circulaire ou la pièce cannelée dynamique, pour autant que la transmission à démultiplication harmonique comprenne seulement la pièce cannelée circulaire ou la pièce cannelée dynamique, et où l'on entend par largeur effective du composant la portion dans la direction axiale du générateur d'onde ou de la transmission à démultiplication harmonique qui peut être amenée en contact fonctionnel avec la pièce cannelée flexible.

2. Transmission à démultiplication harmonique selon la revendication 1, **caractérisée en ce que** la pièce cannelée flexible (7 ; 7') vient en prise avec la pièce cannelée circulaire (13) sur sa largeur effective (b3).

3. Transmission à démultiplication harmonique selon la revendication 1 ou la revendication 2, **caractérisée en ce que** la pièce cannelée flexible (7) vient en prise avec la pièce cannelée dynamique (14) sur sa largeur effective (b4).

4. Transmission à démultiplication harmonique selon l'une quelconque des revendications précédentes, **caractérisée en ce que** la largeur effective (b1') du composant (3') est supérieure d'au moins 5 %, de préférence d'au moins 10 %, à la largeur effective (b2 ; b2') de la pièce cannelée flexible (7).

5. Transmission à démultiplication harmonique selon l'une quelconque des revendications précédentes, **caractérisée en ce que** la largeur effective (b1') du composant (3') est supérieure de jusqu'à 30 %, de préférence de jusqu'à 25 %, à la largeur effective (b2 ; b2') de la pièce cannelée flexible (7) .

6. Transmission à démultiplication harmonique selon l'une quelconque des revendications précédentes, **caractérisée en ce que** le composant (3') roule sur ou s'engrène avec la pièce cannelée flexible (7) de préférence sans interruption sur la largeur effective (b2 ; b2') de la pièce cannelée flexible (7).

7. Transmission à démultiplication harmonique selon l'une quelconque des revendications précédentes, **caractérisée en ce que** l'au moins un composant est un palier (3'), en particulier un palier à roulement (3') ou un palier lisse, lequel entoure le corps de base (2) du générateur d'onde (1') générant un mouvement ondulatoire.

8. Transmission à démultiplication harmonique selon l'une quelconque des revendications 1 à 6, **caractérisée en ce que** l'au moins un composant (3') est une roue planétaire d'une transmission planétaire servant de générateur d'onde.

9. Transmission à démultiplication harmonique selon l'une quelconque des revendications précédentes, **caractérisée en ce que** la pièce cannelée flexible (7') s'étend dans la direction axiale au moins au-delà de sa largeur effective (b2) et, de préférence, son côté frontal saillant (23) sert au moins partiellement de surface de guidage.

10. Transmission à démultiplication harmonique selon le préambule de la revendication 1 ou selon l'une quelconque des revendications précédentes, **caractérisée en ce que** la pièce cannelée circulaire (13) et la pièce cannelée dynamique (14) sont prévues, lesquelles présentent des largeurs différentes au moins dans la région d'accouplement (15) avec la pièce cannelée flexible (7).
